# EUROPEAN PATENT APPLICATION

(11) **EP 0 864 730 A1**
(43) Date of publication of application: **16.09.1998**
(21) Application number: 98301635.3
(22) Date of filing: 05.03.1998
(51) Int. Cl.: F01L 3/02, F01L 3/04

(54) **Inlet valve in an internal combustion engine and a method of manufacturing the same**

(30) Priority: 11.03.1997 JP 55934/97
(71) Applicant: FUJI OOZX INC., Fujisawa-shi, Kanagawa-ken (JP)
(72) Inventor: Unno, Shinichi, Fujisawa-shi, Kanagawa-ken (JP); Asanuma, Hiroaki, Fujisawa-shi, Kanagawa-ken (JP)
(74) Representative: Ben-Nathan, Laurence Albert

(57) **Abstract**

An Al or Al alloy inlet valve is used to lighten a valve operating mechanism in an internal combustion engine. The inlet valve comprises a valve stem and a valve head at the end of the valve stem. Stress is concentrated into a back portion of the valve head, so that it is likely to cause fatigue fracture in the valve. On the back portion, there is formed an alloy layer which comprises material of the valve and reinforcement material such as Ti, Cr and Ni.

## Description

### BACKGROUND OF THE INVENTION

The present invention relates to an inlet valve made of Al or Al alloy in an internal combustion engine, and a method of manufacturing it.

Inlet valves in internal combustion engines are generally made of martensite heat resistant steel. Recently inlet valves which have relatively low heat load have been made of Al alloy.

Martensite inlet valves have high heat resistance, but have high inertia mass, which is disadvantageous.

In the meantime, in Al alloy inlet valve, inertia mass in a valve operating mechanism is reduced under low heat load circumstance, thereby increasing engine performance and improving output or fuel expenses.

However, as one of the problems of Al alloy inlet valves, strength is low in a back portion of a valve head into which stress is concentrated, and it is likely to cause fatigue fracture. If the back portion of the valve head is thickened, strength is increased, but it is impossible to lighten the valve itself. Further, air-inlet passage area around the valve head is decreased, thereby increasing air-intake resistance.

### SUMMARY OF THE INVENTION

In view of the foregoing disadvantage, it is an object of the present invention to provide an inlet valve in an internal combustion engine to increase strength of a back portion of a valve head into which stress is concentrated, without thickening.

It is another object of the present invention to provide a method of manufacturing such a valve.

According to one aspect of the present invention, there is provided an inlet valve in an internal combustion engine, made of Al or Al alloy, comprising:
a valve stem; and
a valve head at one end of the valve stem, the valve head having a back portion into which stress is concentrated, said back portion having an alloy layer of material of said inlet valve and reinforcement material on an outer circumferential surface portion.

Without thickening, strength is increased in the back portion, and it becomes possible to lighten the inlet valve to increase performance of the engine.

According to another aspect of the present invention, there is provided a method of manufacturing an inlet valve in an internal combustion engine, comprising the steps of:
putting reinforcement powdery material on a surface layer of back portion of a valve head of Al or Al alloy inlet valve; and
melting the reinforcement powdery material with high energy heating means to form an alloy layer of the reinforcement powdery material and material of the inlet valve.

The alloy layer can be easily made on the surface of the back portion of the valve head to stregthen the back portion without increasing weight of the valve.

### BRIEF DESCRIPTION OF THE DRAWINGS

The object and advantages of the present invention will become more apparent from the following description with respect to an embodiment as shown in the accompanying drawings wherein:
Fig. 1 is a central vertical sectional front view of a valve operating mechanism of an inlet port having an inlet valve according to the present invention; and
Fig. 2 is a partially sectioned enlarged view of an inlet valve.

### DETAILED DESCRIPTION OF PREFERRED EMBODIMENTS

An embodiment of the present invention will be described with respect to appended drawings.

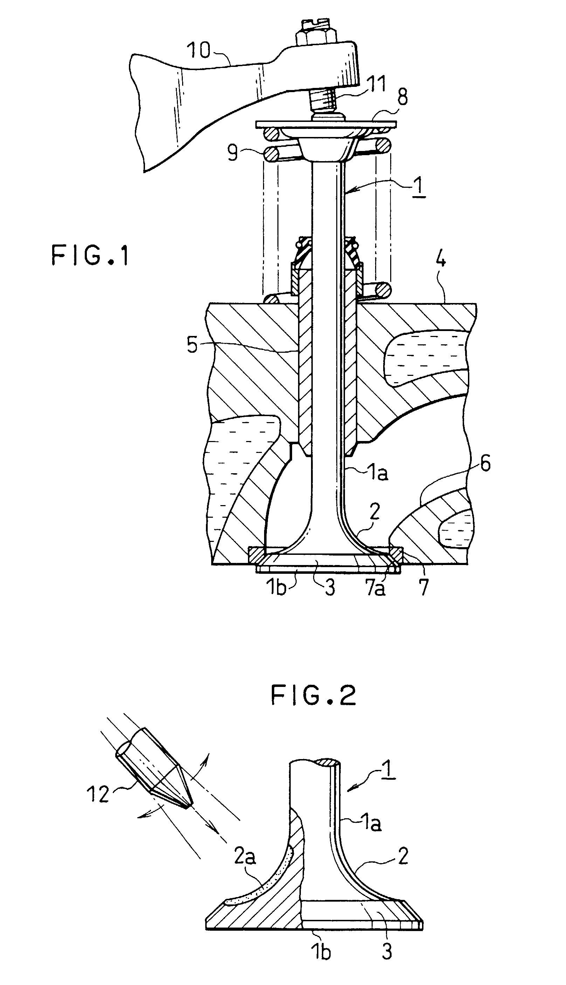

Fig. 1 illustrates a valve operating mechanism for an inlet port in a multi-cylinder gasoline engine, and Fig. 2 is a partially sectional view of a valve head of an inlet valve according to the present invention used in the valve operating mechanism.

The inlet valve 1 is made of Al alloy, such as Al-Si and Al-Si-C, and has the valve head 1b at the lower end of a valve stem 1a. The valve head 1b the lower surface of which faces a combustion chamber has a back portion 2 which is similar in shape to one of a conventional heat-resistant inlet valve. A tapered valve face 3 is formed on the outer circumferential surface of the valve head 1b.

As shown in Fig. 2, an alloy layer is formed on the outer circumferential surface 2a of the back portion 2 which extends from the lower end of the valve stem la to the valve face 3 of the inlet valve 1. The alloy layer is made of material of the inlet valve 1 and reinforcement material of one element or mixture of two or more elements of Ti, Cr, Ni, Cu, Mo, Mn, Fe and Ta. The reinforcement material may be Ti, Cr or Ni.

The alloy layer is made as follows. On the surface of the back portion 2, powdery material which is made of the above reinforcement material is put, and the surface of the back portion 2 is heated with a laser 12 to melt an Al alloy matrix again and to melt the reinforcement material partially, or to melt the reinforcement material directly with the laser 12 and to melt the surface layer of the matrix again, thereby forming an alloy layer which comprises the matrix metal and the reinforcement material. To heat the back portion 2, an electronic beam or a plasma arc may be employed as high energy heating means. An intermetallic compound which comprises the matrix and the reinforcement material is contained in the alloy layer. Thus, the outer circumferential layer 2a is hardened to increase mechanical strength. The alloy layer may extend into the valve face 3.

In the inlet valve 1 in which the back portion 2 is reinforced, the valve stem la is slidably inserted in a valve guide 5 of a cylinder head 4. The tapered valve face 3 of the inlet valve 1 is fitted on a seat portion 7a of a valve seat 7 at the lower end of an inlet port 6, which is usually closed. A valve spring retainer 8 is held via a pair of cotters (not shown) at the upper end of the valve stem la of the inlet valve 1. Between the valve spring retainer 8 and the upper surface of the cylinder head 4, a valve spring 9 is provided so that the inlet valve 1 may be usually biased upward.

The upper end of the inlet valve 1 is pressed by an adjuster bolt 11 engaged in the end of a rocker arm 10 which is vertically moved by a cam (not shown), so that the inlet valve 1 is opened and closed.

The lower surface of the valve head 1b of the inlet valve is heated with heat from the combustion chamber owing to operation of the engine, and the back portion is cooled by inlet air, so that heat stress is concentrated to the back portion 2. A valve head which is made only of Al alloy as matrix does not provide enough strength to bear such heat stress, and it is likely to cause fatigue fracture. In the inlet valve of the present invention, the surface 2a of the back portion 2 to which stress is concentrated is reinforced, thereby avoiding such fracture in the valve head 3a, so that a strong Al alloy inlet valve 1 is made.

The foregoings merely relate to an embodiment of the present invention. Various changes and modifications may be made by persons skilled in the art without departing from the scope of claims wherein:

## Claims

1. An inlet valve in an internal combustion engine, made of Al or Al alloy, comprising:
a valve stem; and
a valve head at an end of the valve stem, the valve head having a back portion into which stress is concentrated, said back portion having an alloy layer of material of said inlet valve and reinforcement material on an outer circumferential surface.

2. The inlet valve as defined in claim 1 wherein the reinforcement material is one element or mixture of two or more elements of Ti, Cr, Ni, Mo, Mn, Fe and Ta.

3. The inlet valve as defined in claim 1 wherein the reinforcement material is Ti, Cr or Ni.

4. A method of manufacturing an inlet valve in an internal combustion engine, comprising the step of:
putting reinforcement powdery material on a surface layer of back portion of a valve head of Al or Al alloy inlet valve; and
melting the reinforcement powdery material with high energy heating means to form an alloy layer of the reinforcement powdery material and material of the inlet valve.

5. The method as defined in claim 4 wherein the reinforcement powdery material is one element or mixture of two or more elements of Ti, Cr, Ni, Mo, Mn, Fe and Ta.

6. The method as defined in claim 4 wherein the reinforcement material is Ti, Cr or Ni.

7. The method as defined in claim 4 wherein the high energy heating means comprises a laser, an electronic beam or plasma arc.

8. The method as defined in claim 4 wherein the high energy heating means comprises a laser.
